# NEUE EUROPÄISCHE PATENTSCHRIFT

(11) **EP 2 828 966 B2**
(45) Veröffentlichungstag und Bekanntmachung des Hinweises auf die Entscheidung über den Einspruch: **24.10.2018**
(45) Hinweis auf die Patenterteilung: 02.03.2016
(21) Anmeldenummer: 13709318.3
(22) Anmeldetag: 04.03.2013
(51) Int. Cl.: H02M 7/00, H02M 7/12

(54) **SCHALTUNGSANORDNUNG UND ANORDNUNG VON KONDENSATOREN**
CIRCUIT ARRANGEMENT AND CAPACITOR ARRANGEMENT
ENSEMBLE CIRCUIT ET ENSEMBLE CONDENSATEUR

(30) Priorität: 22.03.2012 DE 102012005622
(43) Veröffentlichungstag der Anmeldung: 28.01.2015
(73) Patentinhaber: Sew-Eurodrive GmbH & Co. KG, 76646 Bruchsal (DE)
(72) Erfinder: MARAHRENS, Klaus, 76337 Waldbronn-Reichenbach (DE)
(86) Internationale Anmeldenummer: PCT/EP2013/000622
(87) Internationale Veröffentlichungsnummer: WO 2013/139433

(56) Entgegenhaltungen:
- CN-A- 101 976 850
- DE-A1- 10 310 577
- DE-A1- 19 833 491
- JP-A- 2006 020 394
- JP-A- 2007 325 377
- JP-A- 2009 111 435
- US-A- 3 739 300

## Beschreibung

Die Erfindung betrifft eine Schaltungsanordnung mit einer Anordnung von Kondensatoren.

Aus der EP 0 899 859 B1 sind Umrichter bekannt, welche einen Spannungszwischenkreis und einen auf den Spannungszwischenkreis folgenden Wechselrichter aufweisen. Dabei gibt der Wechselrichter an seinen Ausgängen eine dreiphasige Wechselspannung ab. Eine Filteranordnung verbindet die Ausgangsklemmen des Wechselrichters und den Spannungszwischenkreis. Die Filteranordnung umfasst jeweils eine zur Ausgangsklemme in Serie liegende Filterdrossel und einen von jeder Ausgangsklemme zu einem gemeinsamen Kondensatorsternpunkt führenden Filterkondensator.

Die EP 0 899 859 B1 lehrt in Absatz [0006], dass hierbei nur die reinen Drehspannungssysteme gefiltert sind. Verbindet man den Kondensatorsternpunkt direkt mit einem zwischen zwei Zwischenkreiskondensatoren angeordneten Mittelabgriff, so wird zwar auch das Gleichspannungssystem gefiltert, doch es entstehen system-technische Nachteile: Das Filtersystem wird ohne Zusatzmaßnahmen ständig zu Eigenschwingungen angeregt. Wie in Absatz [0007] der EP 0 899 859 B1 gelehrt, sind diese Eigenschwingungen verlustfrei nur durch eine Regelung bedämpfbar, die in die Schaltfolge des Wechselrichters eingreift.

Diese Eigenschwingungen werden bewirkt durch den Serienschwingkreis aus den Filterdrosseln und den mit dem gemeinsamen Kondensatorsternpunkt verbundenen Filterkondensatoren.

Gemäß Absatz [0007] der EP 0 899 859 B1 wird die Schaltfolge des Wechselrichters heutzutage üblicherweise von einem Regelrechner bestimmt, der aufgrund der Lastbedingungen die Schaltbefehle für die Leistungsschalter ermittelt. Der Regelrechner arbeitet üblicherweise wegen der Symmetrie des Ausgangs in nur zwei Koordinaten. Daraus können die Schaltzustände der drei Phasen bestimmt werden. In der Filterschaltung sind die drei Phasen entkoppelt. Eine Resonanzregelung muss also mit drei unabhängig wirkenden Regelkreisen ausgeführt werden. Damit ist die Resonanzreglung nicht mehr einfach in die Lastregelung integrierbar. Da beide Teile der Regelung auf die gleiche Stellgröße zugreifen, können sie jedoch nicht entkoppelt arbeiten.

Ein weiterer Nachteil der oben beschriebenen Schaltung der EP 0 899 859 B1 ist die hohe zusätzliche Strombelastung der Zwischenkreiskondensatoren und des Wechselrichters, die sich insbesondere bei niedrigen Schaltfrequenzen der Wechselrichter-Halbleiterschalter aus der Umladung der Filterkondensatoren durch das Spannungs-Gleichsystem ergeben.

Wie in der Figur 5 der EP 0 899 859 B1 offenbart ist der Kondensatorsternpunkt über ein RC-Glied, gebildet aus einem Widerstand in Serie geschaltet zu einem Kondensator, an den Spannungszwischenkreis angeschlossen.

Die JP 2000 224862 A zeigt eine Energieumwandlungsvorrichtung.

In der DE 10 2010 009 265 A1 ist ein Wechselrichter gezeigt.

Die JP 2007 259688 A zeigt einen Dreiphasengleichrichter.

In der US 2010 0320992 A1 ist ein Inverswandler mit Abtast-Halte-Schaltung gezeigt.

Die DD97943 beschreibt eine Schaltungsanordnung zur Flammenüberwachung von an einer Gleich- oder Wechselspannungsquelle und mit flüssigen Brennstoffen betriebenen motorunabhängigen Heizungseinrichtungen.

In der DE 100 19 696 A1 ist ein Verfahren und eine Schaltung zur Verringerung von Störstrahlung in Motorspeiseschaltungsanwendungen gezeigt.

Die DE 10 2010 028 927 A1 zeigt eine Leistungselektronikanordnung.

Die DE 40 23 687 A1 zeigt eine Stromrichteranordnung.

Die WO 2008 092152 A2 zeigt einen Common Mode und einen Differential Mode Filter für einen Frequenzumrichter.

Die DE 10 2009 053 583 B3 zeigt eine modular aufgebaute Stromrichteranordnung.

Die CN 101976850 A zeigt ein Steuerverfahren für einen Photovoltaik-Wechselrichter.

Die DE 103 10 577 A1 zeigt einen Nullspannungsfilter für Umrichter mit selbstgeführtem Netzstromrichter und Gleichspannungszwischenkreis.

Der Erfindung liegt die Aufgabe zugrunde, eine Schaltungsanordnung und eine Anordnung von Kondensatoren weiterzubilden, wobei kostengünstig eine hohe Sicherheit erreichbar sein soll.

Erfindungsgemäß wird die Aufgabe bei der Schaltungsanordnung nach den in Anspruch 1 angegebenen Merkmalen gelöst.

Wichtige Merkmale der Erfindung bei der Schaltungsanordnung für einen Umrichter mit einer Filteranordnung sind, dass die Schaltungsanordnung einen Umrichter aufweist, der einen Wechselspannungsanschluss, insbesondere für eine mehrphasige aus- oder eingangsseitige Wechselspannungsquelle, und einen ein- oder ausgangsseitigen unipolaren Anschluss, insbesondere Gleichspannungsanschluss, insbesondere für einen Spannungszwischenkreis, aufweist,
wobei der Wechselspannungsanschluss mit Phasenzuleitungen verbunden ist, insbesondere mit drei Phasenzuleitungen, insbesondere wobei die Phasenzuleitungen Induktivitäten aufweisen,
wobei erste Kapazitäten jeweils zwischen einer Phasenzuleitung und einem gemeinsamen Sternpunkt angeordnet sind,
insbesondere wobei zwischen einer jeweiligen, insbesondere jeder, Phasenzuleitung und dem gemeinsamen Sternpunkt jeweils eine der ersten Kapazitäten angeordnet ist
wobei eine Reihenschaltung von Kapazitäten am unipolaren Anschluss angeschlossen ist und einen Mittelabgriff aufweist,
wobei der Sternpunkt mit dem Mittelabgriff im Spannungszwischenkreis elektrisch leitend verbunden ist, insbesondere mittels eines lokalen Nullleiters,
und wobei zumindest eine dritte Kapazität parallel geschaltet ist zu der Reihenschaltung.

Von Vorteil ist dabei, dass ein hochfrequenter Potentialbezug zwischen einem Wechselspannungsabschnitt und einem Gleichspannungsabschnitt der Schaltung hergestellt wird. Mittels dieses Potentialbezugs werden Potentialsprünge zwischen dem Wechselspannungsabschnitt und dem Gleichspannungsabschnitt der Schaltung unterdrückt. Diese Potentialsprünge entstehen aufgrund des Schaltmusters des Umrichters. Üblicherweise werden durch Streukapazitäten der Schaltungsanordnung resultierende Störströme über ein Erdungskabel abgeleitet, welches insbesondere bei hoher Schaltfrequenz stark von den Störströmen belastet ist. Somit sind Erdungskabel entlastet mithilfe der erfindungsgemäßen Schaltungsanordnung.

Vorteilhafterweise ist der Sternpunkt unmittelbar verbunden mit dem Mittelabgriff. Somit ist ein Kurzschluss ohne Spannungsabfall erreichbar für sehr hochfrequente Ströme im Kilohertzbereich.

Bei der Erfindung ist also ein Filtersystem aus den ersten Kapazitäten samt dritter Kapazität und den Induktivitäten in den Phasenzuleitungen vorhanden. Die Eigenschwingungen dieses Filtersystems sind wesentlich bestimmt durch die zweiten Kapazitäten. Sie sind mittels der durch die große dritte Kapazität verringerbaren zweiten Kapazitäten des Filtersystems frequenzverschoben zu Frequenzen, in denen keine Schwingungsanregung durch das Netz und/oder den Umrichter erfolgt. Dadurch ist die Störwirkung auf den Umrichter sehr gering und eine zusätzliche Regelung ist nicht erforderlich.

Die erfindungsgemäße Schaltungsanordnung ermöglicht also eine hohe Betriebssicherheit des Umrichters, wobei gleichzeitig der Schaltungsaufwand verringerbar ist. Somit ist auch der Umweltschutz verbessert.

Bei einer vorteilhaften Ausgestaltung ist jede der ersten Kapazitäten gleich groß. Von Vorteil ist dabei, dass die drei Phasenzuleitungen gleichmäßig entstört werden, so sind die Störströme optimal ableitbar.

Bei einer vorteilhaften Ausgestaltung ist die Reihenschaltung aus zwei Kapazitäten, insbesondere zwei gleich großen Kapazitäten, gebildet. Von Vorteil ist dabei, dass beide Kapazitäten gleichmäßig beladen und entladen werden. Dadurch ist eine hohe Lebensdauer der Kondensatoren ermöglicht, so dass die Sicherheit erhöht ist. Gleichzeitig ist ein Gleichgewicht zwischen dem oberen und dem unteren Zwischenkreispotential einstellbar.

Bei einer vorteilhaften Ausgestaltung weist die jeweilige, insbesondere jede, Phasenzuleitung eine Reihenschaltung von Induktivitäten, insbesondere Induktivitäten eines Netzfilters, auf, wobei die jeweilige, insbesondere jede, Phasenzuleitung einen Mittelabgriff aufweist. Von Vorteil ist dabei, dass die Kapazitäten der Schaltungsanordnung mittels der Induktivitäten vom Wechselspannungsnetz, also von der Wechselspannungsquelle, entkoppelbar sind, insbesondere sind die Kapazitäten von parasitären Anteilen in der Netzspannung entkoppelbar. Insbesondere sind Oberschwingungen als parasitäre Anteile der Netzspannung von den Kapazitäten entkoppelbar. Dadurch sind Resonanzschwingungen zwischen den Kapazitäten und den Netzimpedanzen verhinderbar.

Bei einer vorteilhaften Ausgestaltung ist der Mittelabgriff zwischen zwei Induktivitäten angeordnet. Von Vorteil ist dabei, dass die Kapazitäten von der Wechselspannungsquelle entkoppelbar sind und auch Rückkopplungen mit dem Umrichter verhinderbar sind.

Bei einer vorteilhaften Ausgestaltung ist die jeweilige vom Mittelabgriff netzseitig angeordnete Induktivität eine Leitungsinduktivität oder eine Reihenschaltung aus Leitungsinduktivität und Filterdrosselinduktivität. Von Vorteil ist dabei, dass der Schaltungsaufwand mittels der Leitungsinduktivität reduzierbar ist, somit sind Ressourcen einsparbar und der Umweltschutz ist verbessert.

Bei einer vorteilhaften Ausgestaltung ist die Kapazität der dritten Kapazität größer als die Kapazität jeder einzelnen der zweiten Kapazitäten, vorzugsweise ist die Kapazität der dritten Kapazität um mindestens einen Faktor zehn größer als die Kapazität jeder einzelnen der zweiten Kapazitäten. Von Vorteil ist dabei, dass die dritte Kapazität den Großteil der Energie des Gleichstromzwischenkreises speichert, während über die kleineren Kapazitäten Spannungsüberschwünge und Störströme ausgeglichen werden, ohne unakzeptabel hohe Verluste zu verursachen. Zusätzlich ist mittels erfindungsgemäßer Wahl des Verhältnisses der Kapazitäten des dritten zu den Kapazitäten der zweiten Kondensatoren, die Frequenz der möglicherweise entstehenden Resonanzschwingungen in einen Frequenzbereich verschiebbar, der für die Stabilität der Schaltung des Umrichters ungefährlich ist.

Bei einer vorteilhaften Ausgestaltung ist der lokale Nullleiter mittels eines weiteren Filters mit dem Erdpotiential elektrisch leitend verbunden, insbesondere wobei das weitere Filter als ein Kondensator ausgeführt ist. Von Vorteil ist dabei, dass hochfrequente Störströme sicher ableitbar sind. Dabei sind die Stromverluste mittels des Filters minimierbar.
Bei einer vorteilhaften Ausgestaltung ist parallel zu jeder ersten Kapazität jeweils eine Reihenschaltung aus einer vierten Kapazität und einem Widerstand angeordnet. Von Vorteil ist dabei, dass auftretende Schwingungen durch den Widerstand bedämpfbar sind.

Bei einer vorteilhaften Ausgestaltung ist parallel zu jeder ersten Kapazität jeweils eine Reihenschaltung aus einer vierten Kapazität und einem Widerstand angeordnet. Von Vorteil ist dabei, dass die Filteranordnung sowohl als Kurzschluss für Störströme mit sehr hohen Frequenzen als auch als Dämpfungsmittel für Störströme mit mittleren Frequenzen fungiert, wobei die Kondensatoren niederfrequente Ströme sperren, so dass diese den Umrichter passieren. Die Dämpfung der Störströme mit mittleren Frequenzen bewirkt dabei, dass eine aus Eigenschwingungen mit der Resonanzfrequenz der Schaltung resultierende Resonanzkatastrophe verhinderbar ist.

Bei einer vorteilhaften Ausgestaltung sind die Reihenschaltungen gleichartig zueinander. Von Vorteil ist dabei, dass die drei Phasenzuleitungen in gleichartiger Art und Weise entstörbar sind und schwingungsgedämpft werden. Somit werden Spannungen und Ströme gleichmäßig auf die Leitungen verteilt.

Bei einer vorteilhaften Ausgestaltung ist die Kapazität der jeweiligen vierten Kapazitäten jeweils kleiner als die Kapazität der jeweiligen ersten Kapazitäten, insbesondere ist die Kapazität einer vierten Kapazität zumindest kleiner als die halbe Kapazität der jeweiligen ersten Kapazität und größer als ein Zehntel der Kapazität der jeweiligen ersten Kapazität, vorzugsweise ist die Kapazität einer vierten Kapazität kleiner als die halbe Kapazität der jeweiligen ersten Kapazität und größer als ein Viertel der jeweiligen ersten Kapazität. Von Vorteil ist dabei, dass eine hochfrequente Resonanz bedämpfbar ist und die Verlustströme mittels des Widerstandes klein haltbar sind.

Bei einer vorteilhaften Ausgestaltung ist der lokale Nullleiter ein Blechteil, welches mit jeweils einem Anschluss der jeweiligen ersten und zweiten Kapazitäten elektrisch leitend verbunden ist und die die jeweiligen Kapazitäten bildenden oder aufweisenden Kondensatoren mechanisch hält. Von Vorteil ist dabei, dass das Blechteil, welches einen im Wesentlichen zweidimensionalen Flächenleiter darstellt, sehr niederinduktiv ist im Vergleich zu Leiterkabeln, welche im Wesentlichen eindimensionale Leiter sind. Dadurch sind Resonanzschwingungen mit den Kondensatoren minimierbar. Die Verwendung des lokalen Nullleiters als Haltemittel ermöglicht eine Reduzierung der erforderlichen Bauteile, da keine zusätzliche Verkabelung erforderlich ist. Somit ist der Umweltschutz verbessert.

Bei einer vorteilhaften Ausgestaltung ist der lokale Nullleiter mehrteilig ausgeführt. Von Vorteil ist dabei, dass der lokale Nullleiter in einfacher Art und Weise zu fertigen und zu transportieren ist. Komplizierte und/oder verwinkelte Geometrien von Schaltungsanordnungen sind gut kontaktierbar. Die einzelnen Bauteile des Nullleiters sind in einfacher Art und Weise mittels beispielsweise Schraubverbindungen verbindbar.

Bei einer vorteilhaften Ausgestaltung ist der lokale Nullleiter als ein derartig geformtes Blechteil ausgeführt, dass er zumindest teilweise gehäusebildend ist für die Kondensatoren, welche die erste und zweite Kapazität bilden, insbesondere ist der lokale Nullleiter gehäusebildend für die Kondensatoren, welche die erste, zweite und vierte Kapazität bilden. Von Vorteil ist dabei, dass das Blechteil als Leitung und als Gehäuse fungiert. Dadurch ist eine zusätzliche Leitung oder ein zusätzliches Gehäuse einsparbar. Also ist Material einsparbar und damit die Umwelt geschont.

Bei einer vorteilhaften Ausgestaltung hält der lokale Nullleiter die Kondensatoren mechanisch und fungiert als Kühlkörper für die mit ihm verbundenen Kondensatoren. Von Vorteil ist dabei, dass ein zusätzlicher Kühlkörper und/oder eine zusätzliche mechanische Haltevorrichtung für die Kondensatoren einsparbar sind. Somit ist die Schaltungsvorrichtung kostengünstig ausführbar.

Wichtige Merkmale der Erfindung bei der Anordnung von Kondensatoren, aufweisend jeweils zumindest einen elektrischen Anschluss, sind, dass
jeweils ein Anschluss jedes Kondensators mit einem Modulgehäuseteil elektrisch leitend verbunden ist,
wobei die Kondensatoren mittels des Modulgehäuseteils elektrisch leitend miteinander verbunden sind,
wobei das Modulgehäuseteil zumindest teilweise gehäusebildend ist für die Kondensatoren.

Von Vorteil ist dabei, dass die Anordnung von Kondensatoren kompakt und platzsparend ausführbar ist. Mittels der zweifachen Verwendung des Modulgehäuseteils als elektrisch leitende Verbindung der Kondensatoren und als Gehäuse sind Bauteile, wie zum Beispiel Verbindungskabel, einsparbar. Somit ist die Anordnung von Kondensatoren kostengünstig herstellbar. Gleichzeitig sind Ressourcen einsparbar, dadurch ist der Umweltschutz verbessert.

Bei einer vorteilhaften Ausgestaltung umfasst die Anordnung eine Schaltungsanordnung nach einem der vorangegangenen Ansprüche. Von Vorteil ist dabei, dass die Anordnung von Kondensatoren als Filteranordnung einsetzbar ist. Somit ist die Betriebssicherheit einer die Anordnung von Kondensatoren aufweisenden Schaltung verbesserbar.

Bei einer vorteilhaften Ausgestaltung fungiert das Modulgehäuseteil als Kühlkörper für die Kondensatoren. Von Vorteil ist dabei, dass ein zusätzlicher Kühlkörper einsparbar ist. Somit ist der Materialaufwand reduzierbar. Damit ist der Umweltschutz verbessert.

Bei einer vorteilhaften Ausgestaltung sind zumindest zwei Kondensatoren parallel geschaltet. Von Vorteil ist dabei, dass mittels der Parallelschaltung der Kondensatoren die Kapazität der Schaltung erhöhbar und die Strombelastbarkeit der Schaltung verbesserbar sind. Somit ist die Betriebssicherheit erhöht.

Bei einer vorteilhaften Ausgestaltung ist aus dem Modulgehäuseteil und zumindest einem weiteren Modulgehäuseteil ein Modulgehäuse zweistückig oder mehrstückig gebildet. Von Vorteil ist dabei, dass die Modulgehäuseteile in einfacher Art und Weise fertigbar sind, beispielsweise mittels Stanzbiegetechnik. Mittels der Verbindung zweier Modulgehäuseteile ist somit ein insbesondere geschlossenes Modulgehäuse erzeugbar.

Bei einer vorteilhaften Ausgestaltung sind die Kondensatoren kraftschlüssig mit dem Modulgehäuseteil verbunden,
wobei das für die kraftschlüssige Verbindung verwendete Befestigungsmittel, insbesondere eine Schraube oder ein Gewindestift, zugleich als elektrische Kontaktierung des jeweiligen Anschlusses der Kondensatoren fungiert. Von Vorteil ist dabei, dass ein zusätzliches Verbindungskabel einsparbar ist.

Bei einer vorteilhaften Ausgestaltung sind jeweils zwei Kondensatoren einander gegenüberliegend auf zwei Seiten eines Verbindungs-Blechteils angeordnet,
wobei das Verbindungsblechteil die Kondensatoren mit einer Phasenzuleitung einer ein- oder mehrphasigen Wechselspannungsquelle elektrisch verbindet. Von Vorteil ist dabei, dass die Kondensatoranordnung besonders kompakt ausführbar ist.

Bei einer vorteilhaften Ausgestaltung sind die Kondensatoren mittels eines einzigen Verbindungselementes mit dem Verbindungs-Blechteil und miteinander kraftschlüssig und/oder formschlüssig verbunden, vorzugsweise ist dieses Verbindungselement als Schraube oder Gewindestift ausgeführt. Von Vorteil ist dabei, dass ein einziges Verbindungselement verwendbar ist, wodurch Bauteile einsparbar sind. Somit ist die Anordnung von Kondensatoren kostengünstig zu fertigen.

Bei einer vorteilhaften Ausgestaltung fungiert das Verbindungselement als elektrische Verbindung von jeweiligen zweiten Anschlüssen der Kondensatoren. Von Vorteil ist dabei, dass zwei Kondensatoren parallel schaltbar sind. Dadurch ist die Kapazität einer Schaltung erhöhbar und die Strombelastbarkeit der Schaltung ist verbesserbar.

Bei einer vorteilhaften Ausgestaltung umgibt ein Umrichtergehäuse das Modulgehäuse, welches zumindest das Modulgehäuseteil aufweist, gehäusebildend,
wobei das Umrichtergehäuse zumindest teilweise aus Metall gefertigt ist,
wobei das Umrichtergehäuse mit dem Massepotential elektrisch leitend verbunden ist. Von Vorteil ist dabei, dass das Modulgehäuse stromführend ausführbar ist, somit ist eine zusätzliche Isolierung, insbesondere Isolierummantelung, des Modulgehäuses einsparbar. Das Umrichtergehäuse umfasst bei einer vorteilhaften Ausgestaltung weitere Schaltungsbauteile, die ebenfalls ein stromführendes Modulgehäuse aufweisen.

Bei einer vorteilhaften Ausgestaltung ist zwischen dem Umrichtergehäuse und dem Modulgehäuse ein weiteres Filter, insbesondere ein Kondensator, angeordnet, welches elektrisch leitend mit dem Umrichtergehäuse und dem Modulgehäuse verbunden ist. Von Vorteil ist dabei, dass Ausgleichs- oder Störströme sicher ableitbar sind.

Bei einer vorteilhaften Ausgestaltung ist das Modulgehäuse mechanisch im Umrichtergehäuse gehalten mittels eines elektrisch isolierenden Halteteils. Von Vorteil ist dabei, dass das Modulgehäuse stromführend ausführbar ist, wobei das geerdete Umrichtergehäuse den Anwender gegen Stromschlag schützt.

Bei einer vorteilhaften Ausgestaltung weist zumindest ein Kondensator ein Verbindungsteil auf, an welchen ein Widerstand anschließbar ist, insbesondere ist der Widerstand auf den Kondensator aufsteckbar. Von Vorteil ist dabei, dass eine Reihenschaltung von Kondensator und Widerstand in einfacher Art und Weise ausführbar ist. Mittels dieser Reihenschaltung ist ein weiteres Filter in die Anordnung von Kondensatoren integrierbar, welches Störungen ausfiltert.

Bei einer vorteilhaften Ausgestaltung weist zumindest ein Kondensator einen Isolierabschnitt auf, welcher zwischen einem Anschluss des Kondensators und dem Modulgehäuseteil angeordnet ist, insbesondere wobei der Isolierabschnitt elektrisch isolierend ausgeführt ist. Von Vorteil ist dabei, dass der Anschluss des Kondensators in einfacher Art und Weise isolierbar ist gegen das Modulgehäuse. Die mechanische Konstruktion ist dabei nur geringfügig zu verändern, so dass der Isolierabschnitt in einfacher Art und Weise auch nachträglich vorsehbar ist.

Bei einer vorteilhaften Ausgestaltung umgibt der Isolierabschnitt den Anschluss des Kondensators radial, insbesondere umgibt der Isolierabschnitt den Anschluss des Kondensators in Umfangsrichtung in einem Radialabstandsbereich vollständig. Von Vorteil ist dabei, dass der Isolierabschnitt einfach und sicher ausführbar ist, beispielsweise als Lochscheibe, wobei der Anschluss durch das Loch hindurchführbar ist. Bei genügend großem Radialabstand ist eine sichere Isolierung erreichbar.

Bei einer vorteilhaften Ausgestaltung ist ein Widerstand und/oder eine Spule mit dem Anschluss des Kondensators und mit dem Modulgehäuseteil elektrisch leitend verbunden. Von Vorteil ist dabei, dass der Widerstand und/oder die Spule in einfacher Art und Weise mittels einer Schraube mit dem Anschluss des Kondensators elektrisch leitend verbindbar ist. Ein zweiter Anschluss des Widerstandes und/oder der Spule ist mittels einer weiteren Schraube mit dem Modulgehäuseteil verbindbar. Somit ist in einfacher Art und Weise eine Reihenschaltung von Kondensator, Widerstand und/oder Spule und Modulgehäuse ausführbar.

Bei einer vorteilhaften Ausgestaltung sind die Verbindungs-Blechteile zur Verbindung mit den Phasenzuleitungen mittels Schrauben mit einer jeweiligen Phasenzuleitung des Wechselspannungsnetzes elektrisch leitend verbunden. Von Vorteil ist dabei, dass die Verbindung besonders sicher ausgeführt ist in Bezug auf mechanische Belastungen.

Bei einer vorteilhaften Ausgestaltung sind die Modulgehäuseteile und/oder Verbindungsblechteile jeweils als Stanz-Biegeteile aus Metallblech ausgeführt, insbesondere als Kupfer-, Aluminium- oder Stahlstanzblechteile ausgeführt. Von Vorteil ist dabei, dass die Modulgehäuseteile in einfacher Art und Weise fertigbar sind. Somit ist die Fertigung besonders kostengünstig.

Bei einer vorteilhaften Ausgestaltung sind die Kondensatoren als Folienkondensatoren, insbesondere Folienkondensatoren in Axialbauform, ausgeführt. Von Vorteil ist dabei, dass die Folienkondensatoren Standardbauteile sind und gut zu beschaffen sind.

Bei einer vorteilhaften Ausgestaltung sind die Kondensatoren als Keramikkondensatoren, insbesondere Keramikkondensatoren in Axialbauform, ausgeführt. Von Vorteil ist dabei, dass die Keramikkondensatoren sich besonders für Höchstfrequenzanwendungen eignen.

Bei einer vorteilhaften Ausgestaltung weist jeder der Kondensatoren eine Induktivität auf, welche kleiner ist als 10 nH. Von Vorteil ist dabei, dass die gesamte Anordnung von Kondensatoren besonders niederinduktiv ist, wodurch die Filteranordnung einen im Bereich hoher Frequenzen vergrößerten Frequenzbereich ausfiltert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße Schaltungsanordnung in schematischer Ansicht gezeichnet.
Figur 2 zeigt ein weiteres Ausführungsbeispiel der erfindungsgemäßen Schaltungsanordnung in schematischer Ansicht.
Figur 3 zeigt eine erfindungsgemäße Anordnung von Kondensatoren in Schrägansicht, wobei ein erstes Modulgehäuseteil ausgeblendet ist.
Figur 4 zeigt die Rückseite der erfindungsgemäßen Anordnung von Kondensatoren in Schrägansicht, wobei ein zweites Modulgehäuseteil ausgeblendet ist.
Figur 5 zeigt die erfindungsgemäße Anordnung von Kondensatoren in Schrägansicht, wobei das erste Modulgehäuseteil eingeblendet ist.
Figur 6 zeigt die Rückseite der erfindungsgemäßen Anordnung von Kondensatoren in Schrägansicht, wobei das zweite Modulgehäuseteil eingeblendet ist.
Figur 7 zeigt ein weiteres Ausführungsbeispiel der erfindungsgemäßen Anordnung von Kondensatoren in Schrägansicht, wobei ein Modulgehäuseteil ausgeblendet ist.
Figur 8 zeigt die Rückseite des weiteren Ausführungsbeispiels der erfindungsgemäßen Anordnung von Kondensatoren in Schrägansicht, wobei ein Modulgehäuseteil ausgeblendet ist.

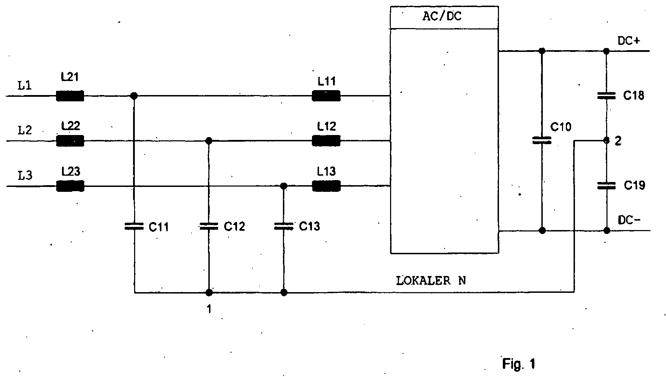

Die in Figur 1 dargestellte Schaltungsanordnung für einen Umrichter weist Klemmen (L1, L2, L3) auf, insbesondere Eingangsklemmen, für eine erste, zweite und dritte Netzphasenleitung einer dreiphasigen Wechselspannungsquelle, im Weiteren werden die Netzphasenleitungen auch Phasenzuleitungen genannt. Diesen Klemmen (L1, L2, L3) nachgeordnet ist in jeder Phasenzuleitung eine Induktivität (L21, L22, L23). Diese Induktivitäten (L21, L22, L23) sind auch als eingangseitige Induktivitäten bezeichenbar.

Eine Anordnung von ersten Kapazitäten (C11, C12, C13) ist den Induktivitäten (L21, L22, L23) nachgeordnet. Dabei ist von jeder Phasenzuleitung eine Leitung abgezweigt, welche über jeweils eine der ersten Kapazitäten (C11, C12, C13) von den drei Induktivitäten (L21, L22, L23) zu einem gemeinsamen Sternpunkt 1 führt. Die ersten Kapazitäten (C11, C12, C13) sind auch als Sternkapazitäten bezeichenbar.

Mittels der ersten Kapazitäten (C11, C12, C13) werden Spannungsspitzen, die in der Schaltungsanordnung entstehen oder aus dem Netz eingespeist würden, herausgefiltert.

Die Induktivitäten (L21, L22, L23) bewirken eine Entkopplung der ersten Kapazitäten (C11, C12, C13) vom Netzstrom, insbesondere von im speisenden Netz, also in der Wechselspannungsquelle, vorhandenen Kapazitäten. Diese Entkopplung unterdrückt Resonanzschwingungen des Stromes zwischen den ersten Kapazitäten (C11, C12, C13) und den im speisenden Netz vorhandenen Kapazitäten, indem die Resonanzfrequenz in anregungsfreie Frequenzbereiche verschoben ist. Den Abzweigungen zu den ersten Kapazitäten (C11, C12, C13) nachgeordnet sind in jeder Phasenzuleitung weitere Induktivitäten (L11, L12, L13) als Arbeitsdrossel oder Stellerdrossel für den Umrichter.

Somit wird diese Anordnung von ersten Kapazitäten (C11, C12, C13) und Induktivitäten (L11, L12, L13, L21, L22, L23) auch als Netzfilter bezeichnet.

Den Induktivitäten (L11, L12, L13) nachgeordnet ist ein Umrichter AC/DC, welcher die eingespeiste Wechselspannung in eine Gleichspannung transformiert.

Im Umrichter AC/DC sind Dioden angeordnet, welche entweder nur Strom mit positiver Spannung oder nur Strom mit negativer Spannung leiten und einen Strom mit jeweils anderer Spannung sperren. Dabei werden jeweils zwei Dioden pro Stromphase verwendet, wobei die Einspeisung zwischen den beiden Dioden angeordnet ist, von denen eine Diode Strom mit negativer Spannung sperrt und die andere Diode Strom mit positiver Spannung sperrt. Dadurch werden jeweils beide Halbschwingungen jeder Phase zur Gleichrichtung genutzt.

Bei weiteren erfindungsgemäßen Ausführungsbeispielen sind im Umrichter AC/DC Transistoren oder Thyristoren angeordnet, vorzugsweise werden IGBT Transistoren verwendet. Dabei werden die Transistoren synchron zur Frequenz der Wechselspannung geschaltet, so dass nur Strom mit positiver Spannung oder nur Strom mit negativer Spannung den Transistor passiert.

Die Energie der Gleichspannung wird in einer dem Umrichter AC/DC nachgeordneten dritten Kapazität C10 zwischengespeichert.

Zwischen zwei zweiten Kapazitäten (C18, C19) ist ein Mittelabgriff 2 angeordnet, wobei dieser Mittelabgriff 2 mittels eines lokalen Nullleiters (LOKALER N) elektrisch leitend verbunden ist mit dem Sternpunkt 1. Die zweiten Kapazitäten (C18, C19) und der Mittelabgriff 2 sind also in Reihe geschaltet angeordnet. Dabei sind die zweiten Kapazitäten (C18, C19) als Teilerkapazitäten bezeichenbar.

Die dritte Kapazität C10 ist dabei mindestens zehnmal so groß wie jede der zweiten Kapazitäten C18 und C19. Daher wird die dritte Kapazität C10 auch Hauptzwischenkreiskapazität genannt.

Den zweiten Kapazitäten (C18, C19) nachgeordnet sind Klemmen (DC+, DC-) zum Anschluss an weitere Bauelemente wie beispielsweise ein Umrichter eines Umrichters zum Ansteuern eines Motors. Dabei verbindet die Klemme DC+ die weiteren Bauelemente mit dem oberen Zwischenkreispotential und die Klemme DC- verbindet die weiteren Bauelemente mit dem unteren Zwischenkreispotential.

Die dritte Kapazität C10 ist parallel zum Umrichter AC/DC geschaltet angeordnet. Die dritte Kapazität C10 ist ebenfalls parallel geschaltet angeordnet zu der Reihenschaltung aus den zweiten Kapazitäten (C18, C19) und dem Mittelabgriff 2.

Die Verbindung zwischen dem Sternpunkt 1 und dem Mittelabgriff 2 mittels des lokalen Nullleiters (LOKALER N) bewirkt eine Entlastung von Erdungskabeln, weil hochfrequente Störströme zwischen dem Zwischenkreis und den Induktivitäten (L11, L12, L13) ausgeglichen werden und nicht in ein Erdungskabel fließen. Solche Störströme werden durch Streukapazitäten verursacht, welche in jedem realen Bauelement vorhanden sind.

Der lokale Nullleiter (LOKALER N) ist als Kabel und/oder als Blechteil ausführbar. Dabei ist ein Blechteil besonders vorteilhaft, da dieses eine deutlich geringere Induktivität aufweist als ein Kabel. Das Blechteil ist zumindest teilweise gehäusebildend ausführbar für die ersten und zweiten Kapazitäten (C11, C12, C13, C18, C19).

Bei weiteren erfindungsgemäßen Ausführungsbeispielen sind die Induktivitäten (L21, L22, L23) als Mehrphasendrossel ausgeführt. Dabei sind die drei Wicklungen der Induktivitäten (L21, L22, L23) auf drei miteinander verbundenen Magnetkernen ausgeführt.

Bei weiteren erfindungsgemäßen Ausführungsbeispielen werden keine Induktivitäten (L21, L22, L23) verwendet. Diese Variante ist insbesondere bei einem Netzanschluss mit langen Anschlussleitungen oder bei einer Netzversorgung, die oberschwingungsarm ist. In diesem Fall sind die Induktivitäten (L21, L22, L23) verzichtbar.

Bei weiteren erfindungsgemäßen Ausführungsbeispielen wird die Schaltungsvorrichtung in einer Rückspeiseeinheit verwendet, beispielsweise einer Rückspeiseeinheit in einem Umrichter, die mit generatorischer Energie eines Elektromotors gespeist wird. In diesem Fall wird ein Gleichstrom in einen mehrphasigen Wechselstrom transformiert, vorzugsweise ist der Spannungsverlauf der einzelnen Phasen sinusförmig.

Für eine Rückspeiseeinheit erfolgt der Stromfluss in entgegengesetzter Richtung zu den bisher beschriebenen Ausführungsbeispielen: Die Klemmen (DC+, DC-) fungieren als Eingangsklemmen für einen Gleichstrom. Mittels des Mittelabgriffs 2 zwischen den zwei zweiten Kapazitäten (C18, C19) werden entstehende Spannungsspitzen abgeleitet. Die nachgeordnete dritte Kapazität C10 zwischenspeichert die elektrische Energie des Spannungszwischenkreises.

Ein Umrichter AC/DC transformiert die Gleichspannung in eine mehrphasige Wechselspannung. Dazu sind im Umrichter AC/DC Transistoren oder Thyristoren angeordnet, vorzugsweise IGBT Transistoren. Die Transistoren werden in einem vom Umrichter AC/DC selbst erzeugten Takt ein- und ausgeschaltet, so dass ein Wechselstrom mit beliebiger Frequenz erzeugt wird, vorzugsweise der Netzfrequenz von 50 Hz oder 60 Hz.

Die Taktung des Umrichters AC/DC wird durch einen nicht dargestellten Mikrocontroller gesteuert und/oder geregelt.

Dem Umrichter AC/DC nachgeordnet sind in jeder Phasenzuleitung der Wechselspannung Induktivitäten (L11, L12, L13) als Filter. Diesen Induktivitäten nachgeordnet ist in jeder Phasenzuleitung eine Abzweigung zu je einer ersten Kapazität (C11, C12, C13). Mittels dieser ersten Kapazitäten (C11, C12, C13) werden Spannungsspitzen zu einem gemeinsamen Sternpunkt 1 abgeleitet.

Der Sternpunkt 1 und der Mittelabgriff 2 sind mittels eines lokalen Nullleiters (LOKALER N) elektrisch leitend verbunden. Diese Verbindung verhindert Potentialsprünge zwischen dem Gleichspannungsbereich mit der dritten Kapazität C10 und dem Wechselspannungsbereich mit den Induktivitäten (L11, L12, L13).

Den Abzweigungen zu den ersten Kapazitäten (C11, C12, C13) nachgeordnet sind in jeder Phasenzuleitung weitere Induktivitäten (L21, L22, L23). Mittels dieser Induktivitäten (L21, L22, L23) werden Resonanzschwingungen zwischen den ersten Kapazitäten (C11, C12, C13) und induktiven Blindströmen des Netzes verhindert.

Bei weiteren erfindungsgemäßen Ausführungsbeispielen wird die beschriebene Rückspeiseeinheit in einem Umrichter für Solarmodule verwendet, um eine von den Solarmodulen erzeugte Gleichspannung in eine Wechselspannung zu transformieren, die in ein Wechselspannungsnetz einspeisbar ist. Hierbei sind einphasige und mehrphasige Wechselspannungen erzeugbar.

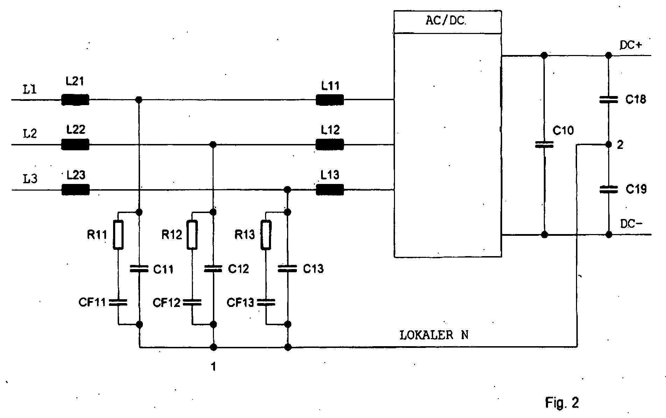

Die in Figur 2 gezeigte Schaltungsanordnung ist eine Variante der zuvor beschriebenen Schaltungsanordnung gemäß Figur 1. Hierbei ist parallel geschaltet zu der ersten Kapazität C11 eine vierte Kapazität CF11 angeordnet. Parallel geschaltet zu der ersten Kapazität C12 ist eine vierte Kapazität CF12 angeordnet. Parallel geschaltet zu der ersten Kapazität C13 ist eine vierte Kapazität CF13 angeordnet.

Die Kapazitäten der vierten Kapazitäten (CF11, CF12, CF13) sind jeweils kleiner als die Kapazitäten der ersten Kapazitäten (C11, C12, C13). Insbesondere sind die Kapazitäten der vierten Kapazitäten (CF11, CF12, CF13) jeweils kleiner als die Hälfte der Kapazität der ersten Kapazitäten (C11, C12, C13) und größer als ein Zehntel der Kapazität der ersten Kapazitäten (C11, C12, C13). Vorzugsweise sind die vierten Kapazitäten (CF11, CF12, CF13) jeweils größer als ein Viertel der Kapazität der ersten Kapazitäten (C11, C12, C13).

Die vierten Kapazitäten (CF11, CF12, CF13) sind jeweils in Reihe geschaltet angeordnet zu einem Widerstand (R11, R12, R13). Mittels dieser parallel geschalteten RC-Reihenschaltung werden resonante Schwingungen in der Schaltungsanordnung gedämpft. Die vierten Kapazitäten (CF11, CF12, CF13) sind auch als Filterkapazitäten bezeichenbar.

Bei weiteren erfindungsgemäßen Ausführungsbeispielen ist eine weitere Vorrichtung zur Verbesserung der elektromagnetischen Verträglichkeit mit dem lokalen Nullleiter (LOKALER N) elektrisch leitend verbunden. Diese Vorrichtung ist vorzugsweise ein Filter 25, beispielsweise eine weitere Kapazität, welche elektrisch leitend mit dem Erdpotential beziehungsweise einem Massepotential verbunden ist, oder eine Induktivität.

Diese weitere Vorrichtung zur Verbesserung der elektromagnetischen Verträglichkeit ist mit geringem technischem Aufwand ausführbar, insbesondere auch bei Umrichtern, welche mit großen Leistungen arbeiten, insbesondere mit Leistungen größer als 100 kW. Dabei ist die geringe Kapazität oder Induktivität der Vorrichtung zur Verbesserung der elektromagnetischen Verträglichkeit ermöglicht durch die guten Filtereigenschaften der Schaltungsanordnung selbst.

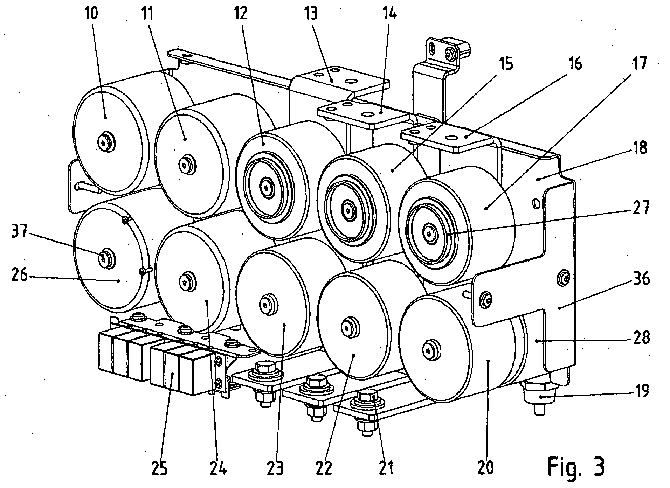

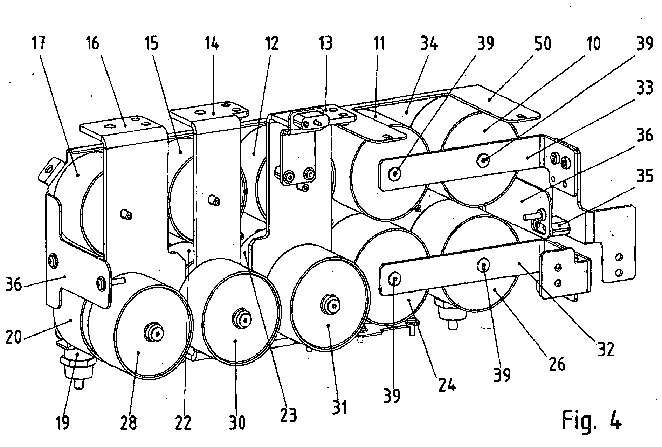

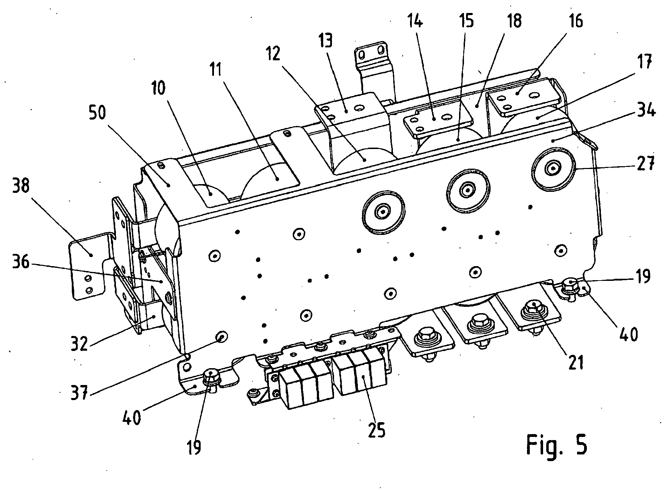

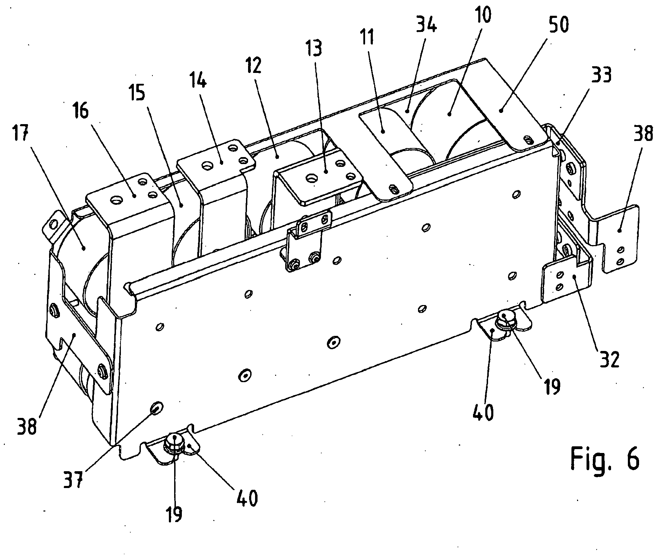

Die Figuren 3 bis 6 zeigen eine erfindungsgemäße Anordnung von Kondensatoren, welche gemäß dem in Figur 2 dargestellten Schaltplan verschaltet sind. Dabei ist die zweite Kapazität C18 gebildet aus zwei parallel geschaltet angeordneten Kondensatoren 10 und 11. Die zweite Kapazität C19 ist gebildet aus zwei parallel geschaltet angeordneten Kondensatoren 24 und 26.

Die erste Kapazität C11 ist gebildet aus zwei parallel geschalteten Kondensatoren 20, 28. Die erste Kapazität C12 ist gebildet aus zwei parallel geschalteten Kondensatoren 22, 30. Die erste Kapazität C13 ist gebildet aus zwei parallel geschalteten Kondensatoren 23, 31.

Die vierte Kapazität CF11 ist gebildet aus dem Kondensator 12 und parallel geschaltet zu den Kondensatoren (23, 31). In Reihe geschaltet zu dem Kondensator 12 ist ein nicht dargestellter Widerstand, welcher elektrisch zwischen dem Kondensator 12 und dem Sternpunkt 1 zwischengeordnet ist.

Die vierte Kapazität CF12 ist gebildet aus dem Kondensator 15 und parallel geschaltet zu den Kondensatoren (22, 30). In Reihe geschaltet zu dem Kondensator 15 ist ein nicht dargestellter Widerstand, welcher elektrisch zwischen dem Kondensator 15 und dem Sternpunkt 1 zwischengeordnet ist.

Die vierte Kapazität CF13 ist gebildet aus dem Kondensator 17 und parallel geschaltet zu den Kondensatoren 20, 28. In Reihe geschaltet zu dem Kondensator 17 ist ein nicht dargestellter Widerstand, welcher elektrisch zwischen dem Kondensator 17 und dem Sternpunkt 1 zwischengeordnet ist.

Die ersten, zweiten und vierten Kapazitäten (C11, C12, C13, C18, C19, CF11, CF12, CF13) sind vorzugsweise als Folienkondensatoren und/oder Keramikkondensatoren ausgeführt. Vorzugsweise sind die Folienkondensatoren und/oder Keramikkondensatoren in Axialbauform ausgeführt.

Unter Axialbauform wird hierbei verstanden, dass ein Kondensator ein zylinderförmiges Gehäuse aufweist, wobei je ein elektrischer Anschluss des Kondensators an jeder Stirnfläche des zylinderförmigen Gehäuses angeordnet ist.

Die ersten, zweiten und vierten Kapazitäten (C11, C12, C13, C18, C19, CF11, CF12, CF13) sind vorzugsweise niederinduktiv ausgeführt, insbesondere ist die Induktivität jeder ersten, zweiten oder vierten Kapazität (C11, C12, C13, C18, C19, CF11, CF12, CF13) kleiner als 10 nH. Jeder Folienkondensator und/oder Keramikkondensator ist zylinderförmig. Die zwei elektrischen Anschlüsse eines jeden Folienkondensators und/oder Keramikkondensators sind an den jeweiligen Stirnflächen angeordnet. Die Anschlüsse sind jeweils als eine Gewindebohrung in dem Folienkondensator und/oder Keramikkondensator ausgeführt. Somit sind die Folienkondensatoren und/oder Keramikkondensatoren mittels Schrauben und/oder Gewindestiften kontaktierbar.

Zwei jeweils erste Anschlüsse der Kondensatoren 10 und 11 sind mittels eines Verbindungsblechteils 33 elektrisch leitend miteinander verbunden und kraftschlüssig miteinander verbunden, wobei jeder der Kondensatoren 10 und 11 auf das Verbindungsblechteil 33 aufgeschraubt ist. Dabei ist jeweils eine Schraube 39 durch eine Ausnehmung im Verbindungsblechteil 33 hindurchgeführt und in ein Gewinde im Kondensator 10 oder 11 eingeschraubt. Die Kondensatoren 10 und 11 sind dabei nebeneinander auf dem Verbindungsblechteil 33 angeordnet.

Zwei jeweils erste Anschlüsse der Kondensatoren 24 und 26 sind mittels eines weiteren Verbindungsblechteils 32 elektrisch leitend miteinander verbunden und kraftschlüssig miteinander verbunden. Vorzugsweise ist jeder der Kondensatoren 24 und 26 mit dem Verbindungsblechteil 32 schraubverbunden. Dabei ist jeweils eine Schraube 39 durch eine Ausnehmung im Verbindungsblechteil 32 hindurchgeführt und in ein Gewinde im Kondensator 24 oder 26 eingeschraubt.

Drei jeweils erste Anschlüsse der drei Kondensatoren (17, 20, 28) sind jeweils mittels eines weiteren Verbindungsblechteils 16 elektrisch leitend miteinander verbunden und kraftschlüssig miteinander verbunden.

Drei jeweils erste Anschlüsse der drei Kondensatoren (15, 22, 30) sind ebenfalls jeweils mittels eines weiteren Verbindungsblechteils 14 elektrisch leitend miteinander verbunden und kraftschlüssig miteinander verbunden.

Drei jeweils erste Anschlüsse der drei Kondensatoren (12, 23, 31) sind ebenfalls jeweils mittels eines weiteren Verbindungsblechteils 13 elektrisch leitend miteinander verbunden und kraftschlüssig miteinander verbunden.

Dabei sind jeweils zwei Kondensatoren 17 und 20 auf einer Stirnfläche des Verbindungsblechteils 16 angeordnet und ein dritter Kondensator 28 ist auf der gegenüberliegenden Stirnfläche des Verbindungsblechteils 16 angeordnet. Die kraftschlüssige Verbindung der Kondensatoren (17, 20, 28) mit dem Verbindungsblechteil 16 ist vorzugsweise als Schraubverbindung ausgeführt. Dabei wird eine Schraube oder ein Gewindestift durch eine Ausnehmung im Verbindungsblechteil 16 hindurchgeführt und mit den Kondensatoren (17,20, 28) verschraubt.

Insbesondere sind die zwei Kondensatoren 20 und 28 einander gegenüber liegend auf zwei Seiten des Verbindungsblechteils 17 angeordnet und mittels eines einzigen nicht dargestellten Gewindestifts, welcher durch eine einzige Ausnehmung im Verbindungsblechteil 17 hindurchgeführt ist, miteinander verbunden.

Die Kondensatoren 12, 15 und 17 weisen jeweils einen Isolierabschnitt 27 auf. Der Isolierabschnitt 27 umgibt einen Anschluss 37 des jeweiligen Kondensators 12, 15 und 17, insbesondere umgibt der Isolierabschnitt 27 den Anschluss 37 radial, insbesondere umgibt der Isolierabschnitt 27 den Anschluss 37 in Umfangsrichtung in einem Radialabstandsbereich vollständig. Hierbei ist die radiale Richtung definiert als die radiale Richtung des jeweiligen zylinderförmigen Kondensators 12, 15, 17, wobei der Anschluss 37 im Zentrum einer Seitenfläche des Zylinders angeordnet ist.

Der Isolierabschnitt 27 ist elektrisch isolierend ausgeführt, vorzugsweise ist der Isolierabschnitt 27 als Kunststoffteil ausgeführt.

Das Modulgehäuseteil 34 weist im Bereich der Kondensatoren 12, 15 und 17, insbesondere kreisförmige, Ausnehmungen auf, durch welche der jeweilige Anschluss 37 und der Isolierabschnitt 27 hindurchgeführt sind. Dabei ist der Isolierabschnitt 27 radial zwischen dem Modulgehäuseteil 34 und dem jeweiligen Anschluss 37 angeordnet, so dass der Anschluss 37 elektrisch isoliert ist gegenüber dem Modulgehäuseteil 34.

Ein nicht dargestellter Widerstand oder eine nicht dargestellte Spule ist auf der einen Seite mit dem Anschluss 37 elektrisch leitend verbindbar und auf der anderen Seite mit dem Modulgehäuseteil 34 elektrisch leitend verbindbar.

Die Anordnung von Kondensatoren ist einem Modulgehäuse angeordnet. Dabei weist das Modulgehäuse zumindest ein erstes Modulgehäuseteil 18 und ein zweites Modulgehäuseteil 34 auf.

Die Modulgehäuseteile (18, 34) und/oder die Verbindungsblechteile (13, 14, 16, 32, 33) sind als Stanz-Biegeteile ausgeführt, sie sind vorzugsweise aus Stahlblech, Aluminiumblech und/oder Kupferblech hergestellt.

Das Modulgehäuse wiederum ist einem nicht dargestellten Umrichtergehäuse angeordnet. Dabei ist das Modulgehäuse elektrisch isoliert angeordnet von dem Umrichtergehäuse.

Das Modulgehäuse ist im Wesentlichen quaderförmig, wobei die Modulgehäuseteile 18 und 34 als Seitenflächen des Modulgehäuses verwendet werden. Die Modulgehäuseteile 18 und 34 sind also im Wesentlichen als rechteckige ebene Blechteile mit rechtwinkelig dazu angeordneten Verbindungsabschnitten (36, 50) ausgeführt. Die Verbindungsabschnitte (36, 50) sind zur kraftschlüssigen und elektrisch leitenden Verbindung der beiden Modulgehäuseteile 18 und 34 verwendbar. Hierzu ist eine Schraube durch jeweils eine Ausnehmung in zwei Verbindungsabschnitten 36 hindurchgeführt und mittels einer Mutter verschraubt.

Ein jeweils zweiter Anschluss der Kondensatoren (10, 11, 20, 22, 23, 24, 26) ist elektrisch leitend und kraftschlüssig verbunden mit dem Modulgehäuseteil 34. Dazu ist jeweils eine Schraube 37 durch eine nicht dargestellte jeweilige Ausnehmung in dem Modulgehäuseteil 34 hindurchgeführt und in den jeweiligen Anschluss der Kondensatoren (10, 11, 20, 22, 23, 24, 26) eingeschraubt. Dabei ist eine Unterlegscheibe zwischen dem Modulgehäuseteil 34 und dem Kopf der Schraube 37 zwischengeordnet.

Ein jeweils zweiter Anschluss der Kondensatoren (28, 30, 31) ist elektrisch leitend und kraftschlüssig verbunden mit dem Modulgehäuseteil 18. Dazu ist jeweils eine Schraube 37 durch eine nicht dargestellte jeweilige Ausnehmung in dem Modulgehäuseteil 18 hindurchgeführt und in den jeweiligen Anschluss der Kondensatoren (28, 30, 31) eingeschraubt. Dabei ist eine Unterlegscheibe zwischen dem Modulgehäuseteil 34 und dem Kopf der Schraube 37 zwischengeordnet.

Somit ist also das Modulgehäuse, welches die Modulgehäuseteile 18 und 34 und die Verbindungsabschnitte (36, 50) aufweist, elektrisch leitend verbunden mit den zweiten Anschlüssen der Kondensatoren (10, 11, 20, 22, 23, 24, 26, 28, 30, 31). Somit wird das Modulgehäuse als Sternpunkt 1 und/oder als lokaler Nullleiter (LOKALER N) verwendet.

Die Modulgehäuseteile (18, 34) sind vorzugsweise als Stanzteile ausgeführt, wobei die Verbindungsabschnitte (36, 50) jeweils einstückig mit dem jeweiligen Modulgehäuseteil (18, 34) ausgeführt sind und mittels Biegen im rechten Winkel ausgelenkt sind. Somit ist eine dritte Seitenfläche des Modulgehäuses mittels der Verbindungsabschnitte (36, 50) gebildet. Das Modulgehäuse ist also teilweise offen ausgeführt.

Zwischen den Verbindungsblechteilen (13, 14, 16) und den Modulgehäuseteilen (18, 34) ist jeweils zumindest ein Kondensator zwischengeordnet. Der Verbindungsabschnitt 36 ist kraftschlüssig mit dem Verbindungsblechteil 33 verbunden, wobei jeweils ein Isoliermittel 35 zwischen dem Verbindungsabschnitt 36 und dem Verbindungsblechteil 33 angeordnet ist. Das Verbindungsblechteil 33 und der Verbindungsabschnitt 36 sind also elektrisch isoliert voneinander angeordnet.

Damit sind also auch die mit dem Verbindungsabschnitt 36 einstückig ausgeführten Modulgehäuseteile (18, 34) elektrisch isoliert von dem Verbindungsblechteil 33 angeordnet. Mit den Modulgehäuseteilen (18, 34) ist das gesamte Modulgehäuse elektrisch isoliert angeordnet von den Verbindungsblechteilen (32, 33).

Ein Verbindungselement 38 ist kraftschlüssig und elektrisch leitend mit dem Verbindungsblechteil 33 verbunden. Mittels des Verbindungselementes 38 ist das Verbindungsblechteil 33 elektrisch leitend verbindbar mit einem nicht dargestellten Zwischenkreiskondensator.

Jede Phasenzuleitung ist mittels jeweils einer weiteren Schraube 21 jeweils mit einem der Bleche (16, 14, 13) elektrisch leitend verbunden.

Das die Anordnung von Kondensatoren aufweisende Modulgehäuse ist in einem nicht dargestellten übergeordneten Umrichtergehäuse angeordnet, welches einen die Anordnung von Kondensatoren aufweisenden nicht dargestellten Umrichter aufweist. Das Modulgehäuse ist dabei kraftschlüssig verbindbar mit dem übergeordneten Umrichtergehäuse. Vorzugsweise sind Schrauben 19 vorgesehen, welche einen Verbindungsabschnitt 40 des Modelgehäuseteils (18 oder 34) mit dem übergeordneten Umrichtergehäuse verbinden. Die kraftschlüssige Verbindung des Modulgehäuses mit dem übergeordneten Umrichtergehäuse ist dabei elektrisch isolierend ausgeführt.

Das Umrichtergehäuse ist zumindest teilweise aus Metall gefertigt und elektrisch leitend verbunden mit dem Erdpotential beziehungsweise dem Massepotential.

Des Weiteren ist ein Filter 25 vorgesehen, welches mit dem Modulgehäuse elektrisch leitend verbunden ist. Dieses Filter 25 wird zur Verbesserung der elektromagnetischen Verträglichkeit der Anordnung von Kondensatoren verwendet. Das Filter 25 ist beispielsweise als weiterer Kondensator ausgebildet, welcher geerdet ist. Vorzugsweise ist das Filter 25 elektrisch leitend verbunden mit dem geerdeten Umrichtergehäuse.

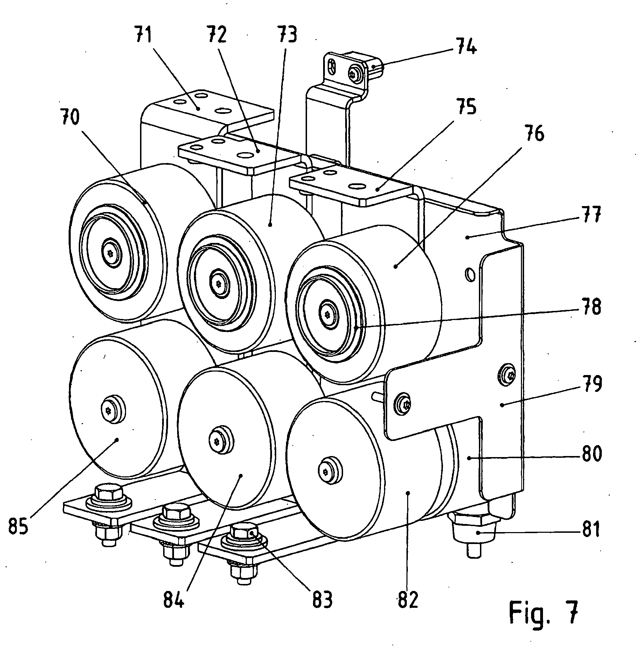

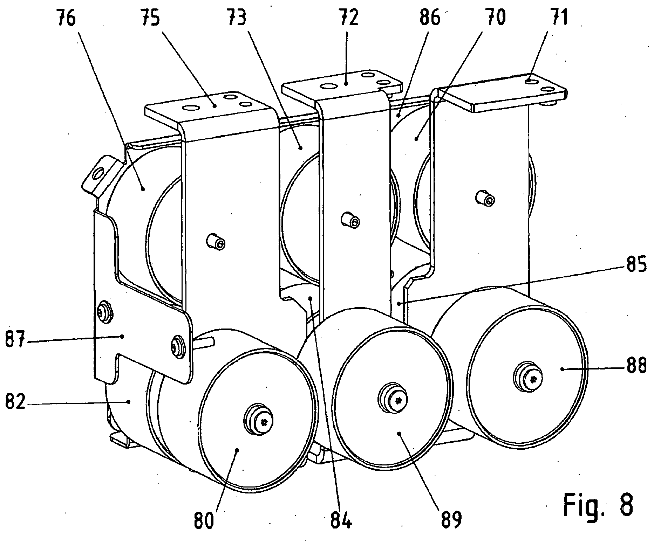

Figur 7 und 8 zeigen ein weiteres erfindungsgemäßes Ausführungsbeispiel der Anordnung von Kondensatoren. Dabei sind die zweiten Kapazitäten C18 und C19 nicht in der Anordnung enthalten. Die Anordnung weist bei diesem Ausführungsbeispiel also lediglich die ersten und vierten Kapazitäten C11, C12, C13, CF11, CF12 und CF13 auf.

Die erste Kapazität C11 ist wiederum gebildet aus zwei Kondensatoren (85, 88). Parallel geschaltet zu den Kondensatoren (85, 88) ist ein Kondensator 70 angeordnet, welcher die vierte Kapazität CF11 bildet.

Die erste Kapazität C12 ist wiederum gebildet aus zwei Kondensatoren (84, 89). Parallel geschaltet zu den Kondensatoren (84, 89) ist ein Kondensator 73 angeordnet, welcher die vierte Kapazität CF12 bildet.

Die erste Kapazität C13 ist wiederum gebildet aus zwei Kondensatoren (80, 82). Parallel geschaltet zu den Kondensatoren (80, 82) ist ein Kondensator 76 angeordnet, welcher die vierte Kapazität CF13 bildet.

Die drei Kondensatoren (70, 85, 88) sind jeweils mittels eines Verbindungsblechteils 71 miteinander verbunden. Die jeweiligen ersten Anschlüsse der Kondensatoren (70, 85, 88) sind insbesondere elektrisch leitend und kraftschlüssig mit dem jeweiligen Verbindungsblechteil 71 verbunden. Die kraftschlüssige Verbindung ist vorzugsweise eine Schraubverbindung.

Die drei Kondensatoren (73, 84, 89) sind jeweils mittels eines Verbindungsblechteils 72 miteinander verbunden. Die jeweiligen ersten Anschlüsse der Kondensatoren (73, 84, 89) sind insbesondere elektrisch leitend und kraftschlüssig mit dem jeweiligen Verbindungsblechteil 72 verbunden. Die kraftschlüssige Verbindung ist vorzugsweise eine Schraubverbindung.

Die drei Kondensatoren (76, 80, 82) sind jeweils mittels eines Verbindungsblechteils 75 miteinander verbunden. Die jeweiligen ersten Anschlüsse der Kondensatoren (76, 80, 82) sind insbesondere elektrisch leitend und kraftschlüssig mit dem jeweiligen Verbindungsblechteil 75 verbunden. Die kraftschlüssige Verbindung ist vorzugsweise eine Schraubverbindung.

Die Anordnung von Kondensatoren ist auch in diesem Ausführungsbeispiel von zwei Modulgehäuseteilen 77 und 86 gehäusebildend umgeben, welche die jeweiligen zweiten Anschlüsse der Kondensatoren (80, 82, 84, 85, 88, 89) elektrisch leitend miteinander verbinden.

Die zwei Modulgehäuseteile (77, 86) sind mittels Verbindungsabschnitten (79, 87) elektrisch leitend und kraftschlüssig miteinander verbunden. Dabei ist der Verbindungsabschnitt 79 einstückig mit dem Modulgehäuseteil 77 ausgeführt. Der Verbindungsabschnitt 87 ist einstückig mit dem Modulgehäuseteil 86 ausgeführt.

Zwischen den Kondensatoren (70, 73, 76) und dem Modulgehäuseteil 86 ist jeweils ein nicht dargestellter Widerstand elektrisch zwischengeordnet.

Das in Figur 7 und 8 dargestellte Ausführungsbeispiel ist vielseitig als Kondensatorsternpunktschaltung verwendbar.

Der erfindungsgemäße Umrichter wirkt zwischen seiner Wechselspannungsanschlussseite und seiner unipolaren Anschlussseite in einer ersten Betriebsart als Gleichrichter, also AC/DC-Wandler, oder in einer zweiten Betriebsart als Wechselrichter, also DC/AC-Wandler. Dabei ist der elektrische Leistungsstrom in der ersten Betriebsart von der Wechselspannungsseite zur unipolaren Anschlussseite hin gerichtet und bei der zweiten Betriebsart umgekehrt gerichtet.

### Bezugszeichenliste

1 Sternpunkt
2 Mittelabgriff
AC/DC Umrichter
C10 Kapazität
C11 Kapazität
C12 Kapazität
C13 Kapazität
C18 Kapazität
C19 Kapazität
DC+ Klemme, oberes Zwischenkreispotential
DC- Klemme, unteres Zwischenkreispotential
L1 Klemme, erste Phasenzuleitung
L2 Klemme, zweite Phasenzuleitung
L3 Klemme, dritte Phasenzuleitung
L11 Induktivität
L12 Induktivität
L13 Induktivität
L21 Induktivität
L22 Induktivität
L23 Induktivität
LOKALER N lokaler Nullleiter
CF11 Kapazität
CF12 Kapazität
CF13 Kapazität
R11 Widerstand
R12 Widerstand
R13 Widerstand
10 Kondensator
11 Kondensator
12 Kondensator
13 Verbindungs-Blechteil
14 Verbindungs-Blechteil
15 Kondensator
16 Verbindungs-Blechteil
17 Kondensator
18 Modulgehäuseteil
19 Schrauben
20 Kondensator
21 Schrauben
22 Kondensator
23 Kondensator
24 Kondensator
25 Filter
26 Kondensator
27 Isolierabschnitt
28 Kondensator
30 Kondensator
31 Kondensator
32 Verbindungs-Blechteil
33 Verbindungs-Blechteil
34 Modulgehäuseteil
35 Isoliermittel
36 Verbindungsabschnitt
37 Schraube
38 Verbindungselement
39 Schraube
40 Verbindungsabschnitt
50 Verbindungsabschnitt
70 Kondensator
71 Verbindungs-Blechteil
72 Verbindungs-Blechteil
73 Kondensator
74 Isoliermittel
75 Verbindungs-Blechteil
76 Kondensator
77 Modulgehäuseteil
78 Verbindungsteil
79 Verbindungsabschnitt
80 Kondensator
81 Schraube
82 Kondensator
83 Schraube
84 Kondensator
85 Kondensator
86 Modulgehäuseteil
87 Verbindungsabschnitt
88 Kondensator
89 Kondensator

## Patentansprüche

1. Schaltungsanordnung für einen Umrichter (AC/DC) mit einer Filteranordnung,
wobei die Schaltungsanordnung einen Umrichter (AC/DC) aufweist, der einen Wechselspannungsanschluss, insbesondere für eine mehrphasige aus- oder eingangsseitige Wechselspannungsquelle, und einen ein- oder ausgangsseitigen unipolaren Anschluss, nämlich Gleichspannungsanschluss für einen Spannungszwischenkreis, aufweist,
wobei der Wechselspannungsanschluss mit drei Phasenzuleitungen verbunden ist, wobei die Phasenzuleitungen Induktivitäten (L11, L12, L13) aufweisen,
wobei erste Kapazitäten (C11, C12, C13) jeweils zwischen einer Phasenzuleitung und einem gemeinsamen Sternpunkt (1) angeordnet sind,
wobei zwischen jeder Phasenzuleitung und dem gemeinsamen Sternpunkt (1) jeweils eine der ersten Kapazitäten (C11, C12, C13) angeordnet ist,
wobei jede der ersten Kapazitäten (C11, C12, C13) gleich groß ist,
wobei eine Reihenschaltung von **zweiten** Kapazitäten (C18, C19) am unipolaren Anschluss angeschlossen ist und einen Mittelabgriff (2) aufweist,
wobei der Sternpunkt (1) mit dem Mittelabgriff (2) im Spannungszwischenkreis elektrisch leitend verbunden ist mittels eines lokalen Nullleiters (LOKALER N),
wobei zumindest eine dritte Kapazität (C10) parallel geschaltet ist zu der Reihenschaltung,
wobei die Reihenschaltung aus zwei gleich großen **zweiten** Kapazitäten (C18, C19) gebildet ist,
wobei parallel zu jeder ersten Kapazität (C11, C12, C13) jeweils eine Reihenschaltung aus einer vierten Kapazität (CF11, CF12, CF13) und einem Widerstand (R11, R12, R13) angeordnet ist,
**wobei die Kapazitäten als Anordnung von Kondensatoren ausgeführt sind , die jeweils zumindest einen elektrischen Anschluss aufweisen,**
**dadurch gekennzeichnet, dass**
jeweils ein Anschluss jedes Kondensators (10, 11, 20, 22, 23, 24, 26, 28, 30, 31) mit einem Modulgehäuseteil (18, 34) elektrisch leitend verbunden ist,
wobei die Kondensatoren (10, 11, 20, 22, 23, 24, 26, 28, 30, 31) mittels des Modulgehäuseteils (18, 34) elektrisch leitend miteinander verbunden sind,
wobei das Modulgehäuseteil (18, 34) zumindest teilweise gehäusebildend ist für die Kondensatoren (10, 11, 20, 22, 23, 24, 26, 28, 30, 31),
wobei das Modulgehäuseteil (18, 34) als Kühlkörper für die Kondensatoren (10, 11, 20, 22, 23, 24, 26, 28, 30, 31) fungiert,
wobei die Kondensatoren (10, 11, 20, 22, 23, 24, 26, 28, 30, 31) kraftschlüssig mit dem Modulgehäuseteil (18, 34) verbunden sind,
wobei die für die kraftschlüssige Verbindung verwendete Schraube oder ein Gewindestift, zugleich als elektrische Kontaktierung des jeweiligen Anschlusses der Kondensatoren (10, 11, 20, 22, 23, 24, 26, 28, 30, 31) fungiert.

2. Schaltungsanordnung nach Anspruch 1,
**dadurch gekennzeichnet, dass**
zumindest zwei Kondensatoren (10, 11, 20, 22, 23, 24, 26, 28, 30, 31) parallel geschaltet sind,
und/oder dass
aus dem Modulgehäuseteil (18, 34) und zumindest einem weiteren Modulgehäuseteil (18, 34) ein Modulgehäuse zweistückig oder mehrstückig gebildet ist.

3. Schaltungsanordnung nach mindestens einem der vorangegangenen Ansprüche,
**dadurch gekennzeichnet, dass**
jeweils zwei Kondensatoren (20, 22, 23, 28, 30, 31) einander gegenüberliegend auf zwei Seiten eines Verbindungs-Blechteils (13, 14, 16) angeordnet sind,
wobei das Verbindungsblechteil die Kondensatoren (12, 15, 17, 20, 22, 23, 28, 30, 31) mit einer Phasenzuleitung einer ein- oder mehrphasigen Wechselspannungsquelle elektrisch verbindet,
insbesondere wobei die Kondensatoren (20, 22, 23, 28, 30, 31) mittels eines einzigen Verbindungselementes mit dem Verbindungs-Blechteil (13, 14, 16) und miteinander kraftschlüssig und/oder formschlüssig verbunden sind, vorzugsweise ist dieses Verbindungselement als Schraube oder Gewindestift ausgeführt,
insbesondere wobei das Verbindungselement als elektrische Verbindung von jeweiligen zweiten Anschlüssen der Kondensatoren (20, 22, 23, 28, 30, 31) fungiert.

4. Schaltungsanordnung nach mindestens einem der vorangegangenen Ansprüche,
**dadurch gekennzeichnet, dass**
ein Umrichtergehäuse das Modulgehäuse, welches zumindest das Modulgehäuseteil (18, 34) aufweist, gehäusebildend umgibt,
wobei das Umrichtergehäuse zumindest teilweise aus Metall gefertigt ist,
wobei das Umrichtergehäuse mit dem Massepotential elektrisch leitend verbunden ist,
insbesondere wobei zwischen dem Umrichtergehäuse und dem Modulgehäuse ein weiteres Filter, insbesondere ein Kondensator, angeordnet ist, welches elektrisch leitend mit dem Umrichtergehäuse und dem Modulgehäuse verbunden ist,
insbesondere wobei das Modulgehäuse mechanisch im Umrichtergehäuse gehalten ist mittels eines elektrisch isolierenden Halteteils.

5. Schaltungsanordnung nach mindestens einem der vorangegangenen Ansprüche,
**dadurch gekennzeichnet, dass**
zumindest ein Kondensator (12, 15, 17) einen Isolierabschnitt aufweist, welcher zwischen einem Anschluss des Kondensators (12, 15, 17) und dem Modulgehäuseteil (18, 34) angeordnet ist, insbesondere wobei der Isolierabschnitt elektrisch isolierend ausgeführt ist,
insbesondere wobei der Isolierabschnitt den Anschluss des Kondensators (12, 15, 17) radial umgibt, insbesondere in Umfangsrichtung in einem Radialabstandsbereich vollständig umgibt,
insbesondere wobei ein Widerstand (R11, R12, R13) und/oder eine Spule mit dem Anschluss des Kondensators (12, 15, 17) und mit dem Modulgehäuseteil (18, 34) elektrisch leitend verbunden ist.

6. Schaltungsanordnung nach mindestens einem der vorangegangenen Ansprüche,
**dadurch gekennzeichnet, dass**
die Verbindungs-Blechteile (13, 14, 16) zur Verbindung mit den Phasenzuleitungen mittels Schrauben mit einer jeweiligen Phasenzuleitung des Wechselspannungsnetzes elektrisch leitend verbunden sind,
und/oder dass
die Modulgehäuseteile (18, 34) und/oder Verbindungsblechteile jeweils als Stanz-Biegeteile aus Metallblech ausgeführt sind, insbesondere als Kupfer-, Aluminium- oder Stahlstanzblechteile ausgeführt sind,
und/oder dass
die Kondensatoren (10, 11, 12, 15, 17, 20, 22, 23, 24, 26, 28, 30, 31) als Folienkondensatoren, insbesondere Folienkondensatoren in Axialbauform ausgeführt sind,
und/oder dass
die Kondensatoren (10, 11, 12, 15, 17, 20, 22, 23, 24, 26, 28, 30, 31) als Keramikkondensatoren, insbesondere Keramikkondensatoren in Axialbauform ausgeführt sind,
insbesondere wobei jeder der Kondensatoren (10, 11, 12, 15, 17, 20, 22, 23, 24, 26, 28, 30, 31) eine Induktivität aufweist, welche kleiner ist als 10 nH.

## Claims

1. A circuit arrangement for a converter (AC/DC) with a filter arrangement,
wherein the circuit arrangement has a converter (AC/DC) which has an AC voltage connection, in particular for a multi-phase output-side or input-side alternating voltage source, and an input-side or output-side unipolar connection, namely DC voltage connection for a voltage link,
wherein the AC voltage connection is connected to three phase supply lines, wherein the phase supply lines have inductors (L11, L12, L13),
wherein first capacitors (C11, C12, C13) are arranged in each case between a phase supply line and a common star point (1),
wherein in each case one of the first capacitors (C11, C12, C13) is arranged between each phase supply line and the common star point (1),
wherein each capacitance of the first capacitors (C11, C12, C13) is of the same value,
wherein a series connection of second capacitors (C18, C19) is connected to the unipolar connection and has a centre tap (2),
wherein the star point (1) is connected in electrically conductive manner to the centre tap (2) in the voltage link by means of a local neutral conductor (LOKALER N),
wherein at least a third capacitor (C10) is connected in parallel to the series connection,
wherein the series connection is formed from two second capacitors (C18, C19) with the same capacitance,
wherein in each case a series connection consisting of a fourth capacitor (CF11, CF12, CF13) and a resistor (R11, R12, R13) is arranged in parallel to each first capacitor (C11, C12, C13),
wherein the capacitors are embodied as an arrangement of capacitor units which have at least one electrical connection in each case,
**characterised in that**
in each case one connection of each capacitor unit (10, 11, 20, 22, 23, 24, 26, 28, 30, 31) is connected in electrically conductive manner to a module housing part (18, 34),
the capacitor units (10, 11, 20, 22, 23, 24, 26, 28, 30, 31) being connected together in electrically conductive manner by means of the module housing part (18, 34),
the module housing part (18, 34) at least partially forming a housing for the capacitor units (10, 11, 20, 22, 23, 24, 26, 28, 30, 31),
the module housing part (18, 34) functioning as a heat sink for the capacitor units (10, 11, 20, 22, 23, 24, 26, 28, 30, 31),
the capacitor units (10, 11, 20, 22, 23, 24, 26, 28, 30, 31) being connected in non-positive manner to the module housing part (18, 34),
the screw used for the non-positive connection or a threaded pin at the same time functioning as an electrical contact of the respective connection of the capacitor units (10, 11, 20, 22, 23, 24, 26, 28, 30, 31).

2. A circuit arrangement according to Claim 1,
**characterised in that**
at least two capacitor units (10, 11, 20, 22, 23, 24, 26, 28, 30, 31) are connected in parallel,
and/or **in that**
a module housing is formed in two parts or in multi-part form from the module housing part (18, 34) and at least one further module housing part (18, 34).

3. A circuit arrangement according to at least one of the preceding claims,
**characterised in that**
in each case two capacitor units (20, 22, 23, 28, 30, 31) are arranged located opposite one another on two sides of a sheet-metal connecting part (13, 14, 16),
the sheet-metal connecting part electrically connecting the capacitor units (12, 15, 17, 20, 22, 23, 28, 30, 31) to a phase supply line of a single-phase or multi-phase alternating voltage source,
in particular the capacitor units (20, 22, 23, 28, 30, 31) being connected to the sheet-metal connecting part (13, 14, 16) and together in non-positive manner and/or in positive manner by means of a single connecting element, preferably this connecting element being designed as a screw or threaded pin,
in particular the connecting element functioning as an electrical connection of respective second connections of the capacitor units (20, 22, 23, 28, 30, 31).

4. A circuit arrangement according to at least one of the preceding claims,
**characterised in that**
a converter housing surrounds the module housing, which has at least the module housing part (18, 34), forming a housing,
the converter housing being manufactured at least partially from metal,
the converter housing being connected in electrically conductive manner to the frame potential,
in particular a further filter, in particular a capacitor unit, being arranged between the converter housing and the module housing, which filter is connected in electrically conductive manner to the converter housing and the module housing,
in particular the module housing being mechanically held in the converter housing by means of an electrically insulating holding part.

5. A circuit arrangement according to at least one of the preceding claims,
**characterised in that**
at least one capacitor unit (12, 15, 17) has an insulating section which is arranged between a connection of the capacitor unit (12, 15, 17) and the module housing part (18, 34), in particular the insulating section being designed to be electrically insulating,
in particular the insulating section radially surrounding the connection of the capacitor unit (12, 15, 17), in particular surrounding it completely in the peripheral direction in a radial spacing region,
in particular a resistor (R11, R12, R13) and/or a coil being connected in electrically conductive manner to the connection of the capacitor unit (12, 15, 17) and to the module housing part (18, 34).

6. A circuit arrangement according to at least one of the preceding claims,
**characterised in that**
the sheet-metal connecting parts (13, 14, 16), for connecting to the phase supply lines, are connected in electrically conductive manner by means of screws to a respective phase supply line of the AC voltage network,
and/or **in that**
the module housing parts (18, 34) and/or sheet-metal connecting parts are designed in each case as stamped and bent parts made of metal sheet, in particular are designed as stamped copper, aluminium or steel sheet-metal parts,
and/or **in that**
the capacitor units (10, 11, 12, 15, 17, 20, 22, 23, 24, 26, 28, 30, 31) are designed as film capacitor units, in particular film capacitor units of axial design,
and/or **in that**
the capacitor units (10, 11, 12, 15, 17, 20, 22, 23, 24, 26, 28, 30, 31) are designed as ceramic capacitor units, in particular ceramic capacitor units of axial design,
in particular each of the capacitor units (10, 11, 12, 15, 17, 20, 22, 23, 24, 26, 28, 30, 31) having an inductance of less than 10 nH.

## Revendications

1. Agencement de circuit pour un convertisseur (CA/CC) comportant un agencement de filtrage,
l'agencement de circuit présentant un convertisseur (CA/CC) qui présente une connexion de tension alternative, en particulier pour une source de tension alternative polyphasée côté sortie ou côté entrée, et une connexion unipolaire, en particulier une connexion de tension continue côté entrée ou côté sortie, en particulier pour un circuit intermédiaire de tension,
la connexion de tension alternative étant reliée à trois conducteurs de phase, les conducteurs de phase présentant des inductances (L11, L12, L13),
des premières capacités (C11, C12, C13) étant disposées chaque fois entre un conducteur de phase et un point neutre commun (1),
une des premières capacités (C11, C12, C13) étant chaque fois disposée entre chaque conducteur de phase respectif et le point neutre commun (1),
chacune des premières capacités (C11, C12, C13) étant de même grandeur,
un couplage en série de deuxièmes capacités (C18, C19) étant connecté à la connexion unipolaire et présentant une prise médiane (2),
le point neutre (1) étant relié électriquement à la prise médiane (2) dans le circuit intermédiaire de tension, au moyen d'un conducteur neutre local (LOKALER N),
au moins une troisième capacité (C10) étant couplée en parallèle avec le couplage en parallèle,
en particulier le couplage en parallèle étant formé de deux deuxièmes capacités (C18, C19) de même grandeur,
un couplage en série d'une quatrième capacité (CF11, CF12, CF13) et d'une résistance (R11, R12, R13) étant respectivement disposé en parallèle sur chaque première capacité (C11, C12, C13),
où les capacités sont réalisées comme un dispositif de condensateurs qui présentent chacun au moins un raccordement électrique
**caractérisé en ce que**
respectivement chaque raccordement de chaque condensateur (10, 11, 20, 22, 23, 24, 26, 28, 30, 31) est relié de façon électriquement conductrice avec une partie de boîtier de module (18, 34),
où la partie de boîtier de module (18, 34) est au moins formatrice de boîtier pour les condensateurs (10, 11, 20, 22, 23, 24, 26, 28, 30, 31),
où la partie de boîtier de module (18, 34) agit comme corps réfrigérant pour les condensateurs (10, 11, 20, 22, 23, 24, 26, 28, 30, 31),
où les condensateurs (10, 11, 20, 22, 23, 24, 26, 28, 30, 31) sont reliés avec conjugaison de forces avec la partie de boîtier de module (18, 34),
où la vis ou la tige filetée utilisée pour la liaison par conjugaison de forces joue en même temps le rôle de contact électrique de respectivement chaque connexion des condensateurs (10, 11, 20, 22, 23, 24, 26, 28, 30, 31).

2. Agencement de condensateurs selon la revendication 1,
**caractérisé en ce que**
au moins deux condensateurs (10, 11, 20, 22, 23, 24, 26, 28, 30, 31) sont couplés en parallèle,
et/ou que
un boîtier de module est formé en deux parties ou en plusieurs parties à partir de la partie de boîtier de module (18, 34) et d'au moins une autre partie de boîtier de module (18, 34).

3. Agencement de condensateurs selon au moins l'une des revendications précédentes,
**caractérisé en ce que**
chaque fois deux condensateurs (20, 22, 23, 28, 30, 31) sont disposés en face l'un de l'autre des deux côtés d'une pièce de tôle de liaison (13, 14, 16),
la pièce de tôle de liaison reliant électriquement les condensateurs (12, 15, 17, 20, 22, 23, 28, 30, 31) à un conducteur de phase d'une source de tension alternative mono- ou polyphasée,
en particulier les condensateurs (20, 22, 23, 28, 30, 31) étant reliés au moyen d'un seul élément de liaison à la pièce de tôle de liaison (13, 14, 16) et entre eux par conjugaison de forces et/ou combinaison de formes, cet élément de liaison étant de préférence réalisé sous la forme d'une vis ou d'une vis sans tête,
en particulier l'élément de liaison servant de liaison électrique de deuxièmes connexions respectives des condensateurs (20, 22, 23, 28, 30, 31).

4. Agencement de condensateurs selon au moins l'une des revendications précédentes,
**caractérisé en ce que**
un boîtier de convertisseur entoure à la manière d'un boîtier le boîtier de module qui présente au moins la partie de boîtier de module (18, 34),
le boîtier de convertisseur étant fabriqué au moins partiellement en métal,
le boîtier de convertisseur étant relié électriquement au potentiel de la masse,
en particulier un autre filtre, en particulier un condensateur, étant disposé entre le boîtier de convertisseur et le boîtier de module, lequel est relié électriquement au boîtier de convertisseur et au boîtier de module,
en particulier le boîtier de module étant maintenu mécaniquement dans le boîtier de convertisseur au moyen d'une pièce de maintien électriquement isolante.

5. Agencement de condensateurs selon au moins l'une des revendications précédentes,
**caractérisé en ce que**
au moins un condensateur (12, 15, 17) présente une section isolante qui est disposée entre une connexion du condensateur (12, 15, 17) et la partie de boîtier de module (18, 34), en particulier la section isolante étant réalisée de manière électriquement isolante,
en particulier la section isolante entourant radialement la connexion du condensateur (12, 15, 17), en particulier l'entourant complètement en direction circonférentielle dans une plage de distances radiales,
en particulier une résistance (R11, R12, R13) et/ou une bobine étant reliée électriquement à la connexion du condensateur (12, 15, 17) et à la partie de boîtier de module (18, 34).

6. Agencement de condensateurs selon au moins l'une des revendications précédentes,
**caractérisé en ce que**
les pièces de tôle de liaison (13, 14, 16) servant à la liaison avec les conducteurs de phase sont reliées électriquement aux conducteurs de phase respectifs du réseau à tension alternative au moyen de vis,
et/ou que
les parties de boîtier de module (18, 34) et/ou pièces de tôle de liaison sont réalisées chaque fois sous la forme de pièces découpées et pliées en tôle métallique, en particulier sous la forme de pièces découpées et pliées en tôle de cuivre, d'aluminium ou d'acier,
et/ou que
les condensateurs (10, 11, 12, 15, 17, 20, 22, 23, 24, 26, 28, 30, 31) sont réalisés sous la forme de condensateurs à film, en particulier de condensateurs à film de type axial,
et/ou que
les condensateurs (10, 11, 12, 15, 17, 20, 22, 23, 24, 26, 28, 30, 31) sont réalisés sous la forme de condensateurs céramiques, en particulier de condensateurs céramiques de type axial,
en particulier chacun des condensateurs (10, 11, 12, 15, 17, 20, 22, 23, 24, 26, 28, 30, 31) présentant une inductance qui est inférieure à 10 nH.
